(19) Europäisches Patentamt
European Patent Office
Office européen des brevets

(11) Publication number: 0 360 457 A2

# (12) EUROPEAN PATENT APPLICATION

(21) Application number: 89309016.7

(22) Date of filing: 06.09.89

(30) Priority: 12.09.88 JP 228124/88

(43) Date of publication of application: 28.03.90 Bulletin 90/13

(84) Designated Contracting States: DE FR GB IT NL

(51) Int. Cl.5: C09K 19/38 , G02F 1/133

(71) Applicant: SANYO CHEMICAL INDUSTRIES LTD.
11-1, Ichinohashinomoto-cho
Higashiyama-ku, Kyoto-shi
Kyoto 605(JP)

(72) Inventor: Hoshino, Hiroshi
No. 1-59-12 Kuzuhaoka
Hirakata-shi Osaka-fu(JP)

(74) Representative: Marlow, Nicholas Simon et al
Reddie & Grose 16, Theobalds Road
London WC1X 8PL(GB)

## (54) A liquid crystal information storage device.

(57) A liquid crystal information storage device comprises a recording layer comprising a liquid surface-developed film of a pendant mesogenic group-containing high molecular weight liquid crystal, containing a hydrophilic group. Such high molecular weight liquid crystals include acrylic polymers and polysiloxanes, containing at least one pendant mesogenic group and at least one hydrophilic group, such as $-COOH$, $-OH$, $-NH_2$, $-SH$, $-SO_3H$, $-OSO_3H$, $-SO_4H$, $OSO_4H$, $-CONH_2$, $-COCH_3$, $-COOCH_3$, $-NHCONH_2$, $-NHCOCH_3$ and $-OCOCH=CH_2$. Such high molecular weight liquid crystals can be aligned without defects.

EP 0 360 457 A2

# A LIQUID CRYSTAL INFORMATION STORAGE DEVICE

## 1. Field of the Invention

This invention relates to liquid crystal information storage devices based on high molecular weight liquid crystal.

## 2. Description of the Prior Art

Low molecular weight liquid crystals have been used widely in the field of applied electronics. On the other hand, application of high molecular weight liquid crystals in the field of information storage devices has been studied actively in recent years.

Such high molecular weight liquid crystals, however, can not be aligned homogeneously, and accordingly it is difficult to obtain aligned films of monodomain, like low molecular weight liquid crystals.

## SUMMARY OF THE INVENTION

It is an object of the present invention to provide a liquid crystal information storage device based on high molecular weight liquid crystal, capable of being aligned homogeneously.

Briefly, this and other objects of the present invention as hereinafter will become more readily apparent have been attained broadly by a liquid crystal information storage device comprises a recording layer comprising a liquid surface-developed film or membrane of a pendant mesogenic group-containing high molecular weight liquid crystal, containing a hydrophilic group.

## DETAILED DESCRIPTION OF THE PREFERRED EMBODIMENTS

Such high molecular weight liquid crystals contain pendant mesogenic groups, and may contain optionally spacer groups between the mesogenic groups and the polymer backbone.

Suitable mesogenic groups include, for example, those represented by $(Ph)_a\text{-}T$ and $(Ph)_b\text{-}X(Ph)_c\text{-}T$, wherein a is 2 or 3, b is 1 or 2, c is 1 or 2, Ph is p-phenylene group. T is a monovalent substituent, such as phenyl group, $-NHCOCH_3$, -CN, $-OCH_3$, $-NO_2$, a halogen atom, an alkyl groups containing 1 - 8 carbon atoms, $CF_3$ and $-N(CH_3)_2$. X is divalent groups such as -CH=CH-, $-CH_2CH_2-$, -CH=CH-COO-, -OCO-CH=CH-, -COO-, -OCO-, -CONH-, -NHCO-, -CH=N-, -N=CH-, -N=N-, $-N\underset{\uparrow O}{=}N-$, and trans-1,4-cyclohexylene group. Other examples of mesogenic groups are those containing cholesterynogen, chiral nematogen or the like. Among these mesogenic groups, preferred are -Ph-COO-Ph-CN, -Ph-Ph-CN, $-Ph\text{-}COO\text{-}Ph\text{-}OCH_3$ and $-Ph\text{-}Ph\text{-}OCH_3$.

Suitable spacer groups are inclusive of (poly)methylene chains [including methylene and polymethylene chains; similar expressions are used hereinafter], containing 1 - 12 carbon atoms; (poly)oxyalkylene chains, such as (poly)oxyethylene chains and (poly)oxypropylene chains, containing 1 - 5 or more oxyalkylene groups; (poly)dimethylsiloxane chains, containing 1 - 5 or more dimethylsiloxane groups; and the like. Among these; preferred are polymethylene chains containing 2 - 6 carbon atoms.

Suitable polymer backbones include, for example, those comprising C-C bonds, such as acrylic polymers and other vinyl polymers; and those comprising Si-O bonds, such as polysiloxanes.

Examples of the formers are ones described in Makromolekulare Chemie,179,p.2541(1978), such as those comprising the structural units of the formula (1) :

$$-\underset{|\atop CO-O-(CH_2)_6O-Ph-Ph-OCH_3}{CH_2CH}- \qquad (1)$$

Examples of the latters are ones described in JPN Patent Lay-open No.79173/1981, such as those comprising the structural units of the formulae (2) and/or (2'):

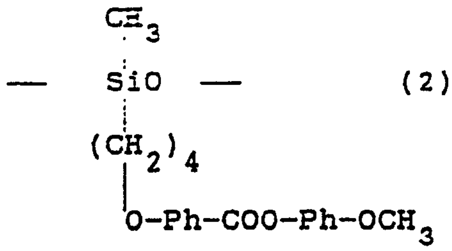

(2)

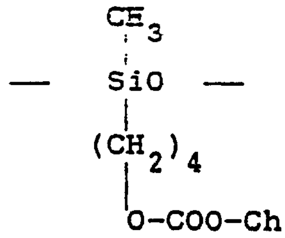

(2')

[ In the above and also hereinafter, Ph represents p-phenylene group, and Ch represents cholesteryl group. ]

In this invention, pendant mesogenic group-containing high molecular weight liquid crystals may be ferro-electric liquid crystals, illustrative of which are those comprising the structural units of the formula (3) :

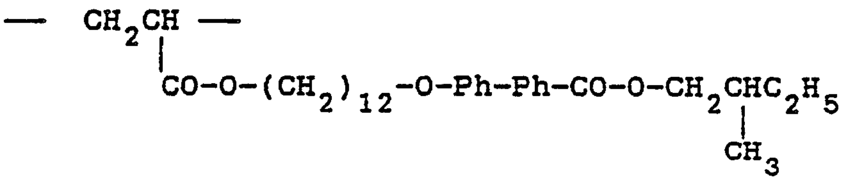

(3)

Examples of suitable hydrophilic groups include -COOH, -OH, $-NH_2$, -SH, $-SO_3H$, $-OSO_3H$, $-SO_4H$, $-OSO_4H$, $-COCH_2$, $-COCH_3$, $-COOCH_3$, $-NHCONH_2$, $-NHCOCH_3$, $-OCOCH=CH_2$ and the like, as well as combinations of two or more of them. Among these, preferred are -COOH, -OH, $-COOCH_3$ and $-OCOCH=CH_2$.

Hydrophilic groups may be attached to pendant mesogenic groups or non-mesogenic pendant groups, or both, preferably in terminal positions of these groups.

Suitable high molecular weight liquid crystals include acrylic polymers and polysiloxanes, containing at least one pendant mesogenic group and at least one hydrophilic group.

Examples of suitable acrylic polymers and polysiloxanes are :

i) those having repeating units represented by the formula (a) and hydrophilic group-containing repeating units represented by the formula (b) :

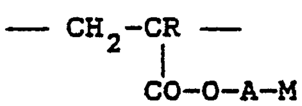

(a) and

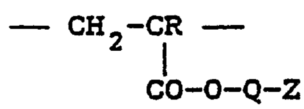

(b)

wherein R is H or methyl group, M is a mesogenic group, A is a spacer group, Z is a hydrophilic group and Q is a divalent organic radical.,

ii) those having hydrophilic group-containing repeating units represented by the formula (c) :

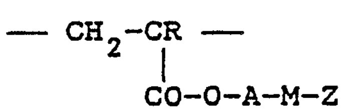

(c)

wherein R is H or methyl group, M is a mesogenic group, A is a spacer group and Z is a hydrophilic group;

iii) those having repeating units represented by the formula (a') and hydrophilic group-containing repeating units represented by the formula (b') :

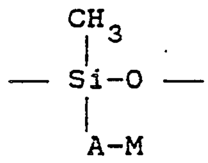 (a′) and 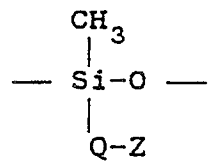 (b′)

wherein M is a mesogenic group, A is a spacer group, Z is a hydrophilic group and Q is a divalent organic radical, and those having hydrophilic group-containing repeating units represented by the formula (c′) :

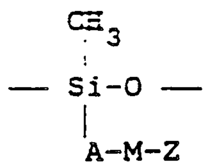 (c′)

wherein M is a mesogenic group, A is a spacer group and Z is a hydrophilic group.

In the formulae (b) and (b′), examples of divalent organic radicals -Q- include $-(CH_2)_n-$, $-(CH_2)_n$-O-Ph- and $-(CH_2)_n$-O-Ph-COO-$(CH_2)_m$-, wherein n and m are independently integers of 2 - 12. Illustrative of the hydrophilic group-terminated non-mesogenic groups -Q-Z are $-(CH_2)_3$-O-Ph-COOH, $-(CH_2)_3$-O-Ph-COO-$(CH_2)_2$-OCO-CH=$CH_2$, and the like.

In the formulae (c) and (c′), examples of the hydrophilic group-terminated mesogenic groups -M-Z include those represented by $\left(Ph\right)_a Z$ and $\left(Ph\right)_b X \left(Ph\right)_c Z$, wherein a is 2 or 3, b is 1 or 2, c is 1 or 2.

In pendant mesogenic group-containing high molecular weight liquid crystals, the molar ratio of the mesogenic groups to the non-mesogenic pendant groups is usually 10:0 -2:8, preferably 10:0 - 5:5, in view of liquid crystallizability.

In pendant mesogenic group-containing high molecular weight liquid crystals containing hydrophilic groups, the molar ratio of the mesogenic groups and/or non-mesogenic pendant groups containing hydrophilic groups to the mesogenic groups and/or non-mesogenic pendant groups free from hydrophilic groups is usually 1:1000 - 1:1, preferably 1:100 - 1:9, in view of alignability. Namely, the content of said hydrophilic group-containing repeating units (b) and/or (c) or (b′) and/or (c′) is 0.1 - 50 mole %, based on the total repeating units.

Molecular weight of high molecular weight liquid crystals containing hydrophilic groups may vary widely, and generally they have a molecular weight between about 2,000 and about 10,000,000 or higher.

High molecular weight liquid crystals containing hydrophilic groups can contain one or more crosslinkable groups, and may be ones crosslinked. Crosslinkable groups can be classified broadly into photo-crosslinkable groups (that is those causing crosslinking reaction with irradiation of light), and other groups (that is those capable of crosslinking reaction other than photo-crosslinking).

Suitable photo-crosslinkable groups include, for example, free radical polymeriable groups, photo-dimerizable groups, azido group, cationic polymerizable groups, and the like.

Examples of free radical polymerizable groups include (meth)acrylate groups, alpha-chloro-acrylate group, styryl group, vinyl group, vinyl ester group, vinyl ketone group and acrylamide group. Illustrative of high molecular weight liquid crystals containing such free radical polymerizable groups are acrylate esters of hydroxypropyl celluloses, as described in Molecular Crystals ans Liquid Crystals, Letters, 102,p.255-(1984), and polysiloxanes containing acryl groups, as written in JFN Patent Lay-open No.294657/1987.

Examples of other groups capable of photo-crosslink ing and groups capable of crosslinking with other reactions include those disclosed in JPN Patent Lay-open No.294657/1987.

Among these crosslinkable groups, preferred are photo-crosslinkable groups, particularly (meth)acrylate groups.

To high molecular weight liquid crystals containing hydrophilic groups, there can be added beforehand various secondary components (such as high molecular weight liquid crystals free from hydrophilic groups and non-liquid crystaline high molecular weight compounds) and auxiliaries, if necessary. The resulting mixtures are hereinafter referred to as film-forming liquid crystals.

High molecular weight liquid crystals free from hydrophilic groups are not particularly restricted, as far as they are compatible with high molecular weight liquid crystals containing hydrophilic groups.

Suitable non-liquid crystaline high molecular weight compounds include, for example, vinyl resins, such

as vinyl chloride resins, (meth)acrylic resins, styrene resins, vinyl chloride-acryl-copolymers and the like; as well as polyester resins, polycarbonate resins, polyurethane resins, and so on. As non-liquid crystaline high molecular weight compounds, film-forming ones are generally used, but ones without film-forming properties can be used in combination with film-forming high molecular weight liquid crystals containing hydrophilic groups.

Similar to high molecular weight liquid crystals containing hydrophilic groups, non-liquid crystaline high molecular weight compounds may also contain crosslinkable groups, such as those mentioned above. Preferable ones are tha same as above. Crosslinkable groups may be contained in the backbone of non-liquid crystaline high molecular weight compounds or/and in the side-chains. Suitable non-liquid crystaline high molecular weight compounds containing crosslinkable groups include various high molecular weight compounds practically used as photo-setting resins. Illustrative examples are triacrylates of triols (such as polyoxypropylene ethers of glycerine).

There may be added initiators for photo-crosslinking, for example, those written in "Photo / Irradiation Setting, Technology" (1985, Taisei-sha),p12, such as acetophenone, benzophenone, Michler's ketone, benzil, benzoin, benzoin ethers, benzyl ethers, benzyl dimethyl ketal, thioxanthone, and derivatives of them.

To high molecular weight liquid crystals containing hydrophilic groups, there can be added dichroic dyes required to display or read out recording of liquid crystals. Examples of suitable dichroic dyes are melocyanine dyes, anthraquinone dyes, styryl dyes, azomethine dyes, squarilium dyes, and the like.

High molecular weight liquid crystals containing hydrophilic groups may contain photo-absorbing dyes, which can be selected according to the wave length of recording light. When semiconductor lasers are used, it is preferred to use near infrared rays-absorbing dyes, for example, those written in "Organic Synthetic Chemistry",Vol.43, No.4, p.36-45(1985), such as phthalocyanines, tetradehydrocholine, benzene dithiol-nickel complex, naphthoquinones, and the like. In case of using He-Ne lasers, Ar lasers, tungsten lamps and halogen lamps, it is preferred to use visible light-absorbing dyes.

In addition, high molecular weight liquid crystals containing hydrophilic groups can be contain non-liquid crystalline liquids, for shortening of response time or for reduction of driving voltage. Illustrative of such liquids are 2-oxazolidinones, propylene carbonate, dialkyl bisphenols, alkylcyclohexylcyclohexanes, and the like.

In this invention, film-forming liquid crystals may give mesophases, such as smectic phases (smectic A phase, chiral smectic C phase, and so on), nematic phase, and cholesteric phase. Chiral smectic C phase is preferred in case where shorter response time is required.

In the invention, clear point (temperature transiting from liquid crystalline phase into isotropic liquid phase) of film-forming liquid crystals may be usually at least 0 °C, preferably at least 50 °C.

Liquid surface-developed films of liquid crystal materials in accordance with the present invention can be obtained by developing or spreading a solution of film-forming liquid crystal on a liquid surface (preferably water surface).

Any solvents can be used, as far as they are compatible with film-forming liquid crystals and have poor solbility into liquid (water). Examples of such solvents are aromatic hydrocarbons, halogenated hydrocarbons, ketones, esters, ethers and the like.

Said solution may contain additives, such as alcohols, phenols, surfactants, and the like, in order to improve spreadability of the solution on liquid surface.

Methods of developing film-forming liquid crystals on a liquid surface include, for instance, those by supplying (dropping) said solution onto water surface, whereby the solution is spontaneously spread on the water surface to form film.

In developing a solution of film-forming liquid crystals, it is preferred to maintain the temperature of the solution and that of the liquid (water) within a certain range. The temperature of the solution is usually 20 - 50 °C. At temperature lower than 20 °C, the solution becomes too viscous to be spreaded homogeneously. On the other hand, at temperature above 50 °C, the solvent is too rapidly evaporated during spreading and the resulting film is liable to be wrinkled. The temperature of the liquid (water) is preferably 5 - 30 °C preferably 10 - 25 °C. Temperature lower than 5 °C causes increase of the solution viscosity; while temperature above 30 C results in too rapid evaporation of the solvent.

Liquid surface-developed films used in this invention are preferably non-LB films, that is films obtained from non-monomolecular layer (layer other than monomolecular layer) and different from LB films (Langmuir-Blodgett films) obtained from monomolecular layer. Non-LB films are of much higher productivity than LB films.

Liquid surface-developed films usually have thickness of 0.01 - 5 micron m. Ultrathin films having thickness of 0.1 micron m or so can be easily obtained from lower concentration solutions of film-forming liquid crystals of higher molecular weight; while relatively thick films may be made from higher concentration solutions.

Plural sheets (several sheets - several hundred sheets) of liquid surface-developed films may be piled up, according to the application purposes, whereby homogeneous and relatively thick films having thickness of 0.1 - 100 micron m or so.

Liquid surface-developed films thus obtained can be further aligned (oriented) and/or crosslinked, if necessary.

Suitable alignment methods, usable in addition to liquid surface-developing, include drawing, electric field alignment, magnetic field alignment, and retention in a chemically or physically aligned substrate.

Drawing methods include, for example, uniaxial stretching, biaxial stretching, inflation, and the like. Drawing may be carried out in an atmosphere containing vapor of solvents, such as toluene, chlorobenzene and the like. Draw ratio is usually 50 - 500%, preferably 100 -300%. Drawing speed is generally 10 - 1000 %/minute.

Electric field alignment can be carried out, for instance, by interposing a liquid surface-developed film between electrodes and applying voltage. In general, a pair of electrodes may be provided so that a liquid surface-developed film is sandwiched between them, but other structures may also be taken. As electrode materials, there can be used metals, such as aluminum, silver and the like, as well as transparent electrical conductors, such as indium tin oxide, by choice. In providing electric field, there can be used alternating current of usually 1 - 10 MV/m strength and 100 - 10,000 Hz frequency. Upon application of electric field, liquid crystals of positive dielectric anisotropy in liquid surface-developed film are aligned hemeotropically or vertically to the electrodes, and liquid crystals of negative anisotropy are aligned homogeneously or parallel to the electrodes. High degree of alignment can be attained by providing electric field at a temperature of mesomorphic temperature range, followed by cooling slowly to the room temperature.

In magnetic field alignment, strength of magnet: field is usually 5 - 20 kG, any of one direction (const direction) magnetic field or alternating magnetic field may be employed. High degree of alignment can be attained by providing magnetic field at a temperature of mesomorphic temperature range, followed by cooling slowly to the room temperature.

Liquid surface-developed films according to this invention may be retained in a chemically or physically aligned substrate. Chemically aligning treatment can be done by operation for forming film-like aligned layers on the substrate surface, and liquid crystals may be alignment controlled with van der Waals force, dipole interaction, or hydrogen bonding. Suitable chemically aligning methods include (1) applying (such as coating) a solution of an aligning agent to form aligned layer with chemical bonding or absorption; (2) water surface-developing of an aligning agent (Langmuir-Blodgett method); and (3 ) plasma polymerization. Physically aligning treatment can be done by operation for deforming fine structure of substrate surface. Suitable physically aligning methods include (1) rubbing method and (2) vapor deposition method. Liquid crystal molecules may be aligned parallel, vertically or obloque to the substrates, in accordance with kinds of alignating agents, aligning menthods, or properties of the liquid crystals. Illustrative examples of aligning agents and aligning methods include those described in 'Racent Technology of Liquid Crystals'(1983, Kogyochosakai). High degree of alignment can be attained by retaining for a certain period of time at a temperature of mesomorphic temperature range, followed by cooling slowly to the room temperature.

Liquid surface-developed and optionally aligned films are usually supported with substrates, which may be selected according to the application purposes, considering thermal conductivity, mechanical properties, optical properties, planar precision and so on. Suitable substrates include, those used generally, for example, glass, ceramics, plastics [such as (meth)acrylic resins, polycarbonate resins, polyolefin resins and the like), and metals (such as aluminum). Shapes of substrates may be varied according to use applications, and include, for instance, plates, discs, drums and the like.

In laminating on substrate, there may be used, in order to improve adhesion properties, binders, adhesives or the like, such as those usually employed for laminated films.

In the invention, crosslinking may be carried out, if necessary. It is preferred to do crosslinking with light. As light for this purpose, ultraviolet ray is used usually, but other irradiation, such as electron beem and alpha rays, may also be used. In carrying out irradiation, photo-mask may be interposed between light source and liquid crystal film to form a desired pattern. In such case, suitable developers, for example, organic solvents (such as methylethyl ketone, xylene and the like) can be used for developing and washing the pattern followed by drying to obtain desired shapes of liquid crystal films at desired positions on the substrate.

In the present invention, information storage devices may comprises, in addition to a recording layer supported on a substrate, one or more layers of various function for the purpose of information storage or display. Such layers include, for example, photo-absorbing layer, reflective layer, anti-reflection layer, protective layer, and the like.

Photo-absorbing layers may be formed by application (such as coating) of photo-absorbing dyes as mentioned above, or by forming film through vacuum deposition of carbon, or metals (bismuth, tellurium and the like).

Reflective layers are usually formed by vacuum deposition of aluminum, silver and the like.

Anti-reflection layers can be formed by means of deposition or the like of transparent inorganic compounds, as written in "Thin Film Handbook"(1983, Ohm-sha), p.820, such as magnesium fluoride.

Devices of the invention may comprises (1) said layer of a liquid crystal material, (2) a plurality of electrodes suitable for applying a voltage to said liquid crystal material, (3) electronic means for applying a voltage to a desired electrode, and (4) means for producing an observable optical change upon application of an appropriate voltage. Illustrative examples of such devices include those as disclosed in US Patent 4,613,209 and GB 2,146,787 A, wherein liquid crystal materials are substituted with liquid surface-developed films according to the present invention.

Information storage devices of this invention, the element can be preferably recorded with use of light.

Suitable light for recording include, for example, semi-conductor laser, Ar laser, He-Ne laser, and so on. Irradiation methods of laser include those by irradiating beem generally focussed to 0.7 - 10 micron m diameter, at pulse width of 0.1 - 10 micro s, with energy of 5 - 20 mW.

As recording light, there may be used usual light sources, such as tungsten lamp, xenon lamp, high-voltage mercury vapor lamp, and light source from light emitting diode. In case of using such light sources, feeding in can be attained with use of patterns put in position between the light source and the element, or with use of arrayed equipments, such as liquid crystal printers, light emitting diode printers or the like.

In addition, recording may be done using heat sources, such as thermal printer heads, in stead of light.

Reading can be generally carried out using optical pickup.

Besides, liquid crystal recording elements of this invention may be used as display devices of large area. In this case, illumination with back-lighting may be used, if necessary.

Erasure can be done with heat or/and light. Erasing with heat may be carried out by heating the recorded layer to a temperature of usually 100 - 150 C with heat source, such as infrared ray lamps, nichrome wire heaters and the like. For erasure with light, there may be used the same laser light as used for writing.

Writing and erasing can be repeated, for instance, 10 times - 100 times or more.

Having generally described the invention, a more complete understanding can be obtained by reference to certain specific examples, which are included for purposes of illustration only and not intended to be limiting unless otherwise specified.

In the following examples, parts, ratio and % mean parts by weight, weight ratio and % by weight, respectively.

Example 1

Trityl ester of 4-allyloxybenzoic acid was prepared by reacting trityl chloride with 4-allyloxybenzoic acid within tetrahydrofuran-triethyl amine mixture.

On the other hand, 4′-cyanophenyl ester of 4-allyloxybenzoic acid was prepared as follows: adding thionyl chloride to allyloxy benzoic acid and reacting them under stirring, followed by removing excess thionyl chloride after the reaction mixture became transparent; and then adding thereto a toluene solution of 4-cyanophenol containing catalic amount of dimethyl formamide, followed by recrystallizing the resulting product with ethanol to obtain 4′-cyanophenyl ester of 4-allyloxybenzoic acid. Allyloxy benzoic acid used in the above reaction was prepared as follows : adding tetrabutyl ammonium bromide to an aqueous solution of 4-hydroxybenzoic acid and potassium hydroxide, followed by adding thereto a toluene solution of allyl chloride dropwise under stirring at 40° C; after completion of the reaction, adjusting pH of the aqueous phase to 3, followed by washing with water and then recrystallizing the resulting solid material with ethanol to obtain allyloxy benzoic acid.

By reacting chloroplatinic acid with 0.42 parts of the above trityl ester, 2.51 parts of the above 4′-cyanophenyl ester and 0. 6 parts of polymethylhydrosiloxane (polymerization degree of 120) and then reacting the resulting intermediate with water/acetic acid mixture for about 15 hours at room temperature to remove trityl group, there was obtained a liquid crystal having a clear point of 130° C.

This high molecular weight liquid crystal compound was dissolved into chlorobenzene to obtain 5% solution. The solution was dropped slowly onto a deionized water surface and spread thereon, followed by removing the resulting film with a slide glass.

By observing the film with a microscope, this was perfectly dark under crossed polarizers and cross

was observed in conoscope, and it was confirmed that the liquid crystal compound was homeotropically aligned.

This water surface-developed film was transferred onto a vanadyl phthalocyanine-coated glass substrate, and then irradiated with a semiconductor laser (830 nm) to record a spot of about 1 micron m diameter.

Example 2

The high molecular weight liquid crystal compound, as obtained in Example 1, was reacted with trifluoroacetic anhydride and then with hydroxyethyl acrylate to obtained a side-chain liquid high molecular weight liquid crystal compound containing about 10 mole % of acrylate groups based on mesogenic groups and having a clear point of 110° C.

In the same manner as in Example 1, a water surface- developed film was prepared from a mixture of the compound and 5% of a photo-initiator (Irgacure 184, produced by Ciba-Geigy). Ultraviolet rays (1.0 $J/cm^2$) was irradiated on the film using a ultraviolet rays irradiator (produced by Ushio-Uteck). The resulting film of crosslinked high molecular weight liquid crystal compound was homogeneous as a whole and of high alignment.

This water surface-developed film was transferred onto a vanadyl phthalocyanine-coated glass substrate, and then irradiated with a semiconductor laser (830 nm) to record a spot of about 1 micron m diameter.

Example 3

4-(2-methylpropenoyloxy)-ethoxy-benzoic acid (hereinafter referred to as Monomer A) was prepared by dissolving 50 parts of p-(2-hydroxyethoxy)benzoic acid, 130 parts of methacrylic acid, 5 parts of p-toluenesulfonic acid and 5 parts of hydroquinone as polymerization inhibitor into 300 parts of chloroform, followed by dehydrating under reflux using a water separator to perform esterification.

On the other hand, 4′-methoxyphenyl ester of 4-[2-(2-methylpropenoyloxy)-ethoxy]-benzoic acid (hereinafter referred to as Monomer 8) was prepared by adding dropwise and reacting an acid chloride, prepared from 22.7 parts of Monomer A and thionyl chloride, to a solution containing 4.6 parts of sodium dissolved into 79 parts of dry ethanol and containing added thereto hydroquinone mono-methyl ether.

5 m moles of Monomer A, 95 m moles of Monomer B and 1 m mole % of azo-bis-iso-butyronitrile were dissolved into tetrahydrofuran and polymerized under an atmosphere of nitrogen for 6 - 8 hours at 55° C. The resulting product was reprecipitated to purify it, followed by drying under reduced pressure to obtain a high molecular weight liquid crystal having clear point of 120° C.

In the same manner as in Example 1, a water surface-developed film was prepared from this compound. The resulting liquid crystal film was homogeneous as a whole and of high alignment.

This water surface-developed film was transferred onto a vanadyl phthalocyanine-coated glass substrate, and then irradiated with a semiconductor laser (830 nm) to record a spot of about 1 micron m diameter.

Example 4

In the same manner as in Example 3, 4-(6-(propenoyloxy)-hexyloxy]-4-biphenyl (hereinafter referred to as Monomer C) was prepared, followed by polymerizing 5 m moles of Monomer A and 95 m moles of Monomer C to obtain a high molecular weight liquid crystal having clear point of 190° C.

In the same manner as in Example 1, a water surface-developed film was prepared from this compound. The resulting liquid crystal film was homogeneous as a whole and had high degree of alignment.

This water surface-developed film was transferred onto a vanadyl phthalocyanine-coated glass substrate, and then irradiated with a semiconductor laser (830 nm) to record a spot of about 1 micron m diameter.

Example 5

The same water surface-developed film of high molecular weight liquid crystal as in Example 1 was interposed between two sheets of ITO glass plate, and voltage of 20 V and 1 kHz was applied thereto for 10 minutes keeping the temperature at 80° C, followed by cooling slowly to the room temperature. It was confirmed that the resulting film had been further aligned.

The above procedure was repeated except that water surface-developed film was produced from a solution of the high molecular weight liquid crystal containing 5% of a dichroic dye LCD-109 (the maximal wave length = 760 nm, produced by Nippon Kayaku) added thereto beforehand. A semiconductor laser was applied to the resulting highly aligned sandwiched cell to write a spot of about 1 micron m diameter.

Example 6

The same water surface-developed film of high molecular weight liquid crystal as in Example 2 was interposed between two sheets of glass plate, which had been coated with polyimide and rubbed, and then heated to 80 C, followed by cooling gradually. Then, to this highly aligned film, was irradiated ultraviolet-light (1.0J/$cm^2$) using a ultraviolet-light irradiator (produced by Ushio-utec). The resulting crosslinked high molecular weight liquid crystal film was homogeneous as a whole and had high degree of alignment.

The above procedure was repeated except that water surface-developed film was produced from a solution of the high molecular weight liquid crystal containing 5% of a dichroic dye LCD-109 added thereto beforehand. A semiconductor laser was applied to the resulting highly aligned sandwiched cell to write a spot of about 1 micron m diameter.

Example 7

The same water surface-developed film of high molecular weight liquid crystal as in Example 2 was interposed between two sheets of glass plate, which had been coated with N,N-dimethyl-N-octadecyl-3-aminopropyltrimethoxysilyl chloride (Dow Corning XZ-2-2300), followed by aligning homeotropically. Then, ultraviolet-light was irradiated to this highly aligned film to obtain a crosslinked high molecular weight liquid crystal film which was homogeneous as a whole and had high degree of alignment.

The above procedure was repeated except that water surface-developed film was produced from a solution of the high molecular weight liquid crystal containing 5% of a dichroic dye LCD-109 added thereto beforehand. A semiconductor laser was applied to the resulting highly aligned sandwiched cell to write a spot of about 1 micron m diameter.

Information storage devices of this invention comprising side-chain high molecular weight liquid crystals containing hydrophilic groups exhibit high contrast of recording display and are of high practical value; because the liquid crystals can be aligned, by water surface-developing, preferentially hydrophilic groups to the water surface side and hydrophobic backbone to the atmosphere side, and therefore the high molecular weight liquid crystal layers are highly homogeneously aligned.

Information storage devices of the invention are useful for optical memory, non-linear optical devices, liquid crystal televisions, liquid crystal displays, and the like, as well as sensors, amplifiers, opticalfilters (such as notch filters), panels for privacy control, sun glasses, blinds, and so on

## Claims

1. An information storage device, which comprises a recording layer supported on a substrate, wherein said layer comprises a liquid surface-developed film of a liquid crystal material comprising at least one pendant mesogen group-containing high molecular weight liquid crystal, containing at least one hydrophilic group.

2. A device according to Claim 1, wherein said high molecular weight liquid crystal comprises at least one polymer, selected from the class consisting of acrylic polymers and polysiloxanes, containing at least one pendant mesogen group and at least one hydrophilic group.

3. A device according to Claim 1 or 2, wherein said hydrophilic group is selected from the group consisting of -COOH, -OH, $-NH_2$, -SH, $-SO_3H$, $-OSO_3H$, $-SO_4H$, $-OSO_4H$, $-CONH_2$, $-COCH_3$, $-COOCH_3$, $-NHCONH_2$, $-NHCOCH_3$ and $-OCOCH=CH_2$.

4. A device according to Claim 1, 2 or 3 wherein said high molecular weight liquid crystal comprises at least one acrylic polymer, selected from the class consisting of those having repeating units represented by

the formula (a) and hydrophilic group-containing repeating units represented by the formula (b) :

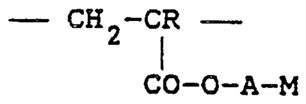 (a) and 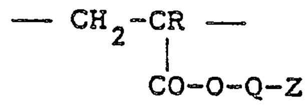 (b)

wherein R is H or methyl group, M is a mesogenic group, A is a spacer group, Z is a hydrophilic group and Q is a divalent organic radical, and those having hydrophilic group-containing repeating units represented by the formula (c) :

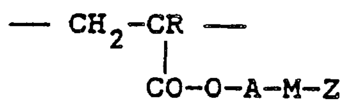 (c)

wherein R is H or methyl group, M is a mesogenic group, A is a spacer group and Z is a hydrophilic group.

5. A device according to Claim 1, 2 or 3 wherein said high molecular weight liquid crystal comprises at least one polysiloxane, selected from the class consisting of those having repeating units represented by the formula (a′) and hydrophilic group-containing repeating units represented by the formula (b′) :

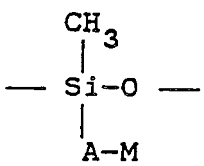 (a′) and 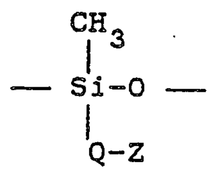 (b′)

wherein M is a mesogenic group, A is a spacer group, Z is a hydrophilic group and Q is a divalent organic radical, and those having hydrophilic group-containing repeating units represented by the formula (c′) :

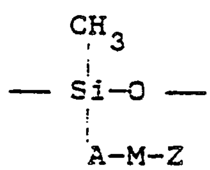 (c′)

wherein M is a mesogenic group, A is a spacer group and Z is a hydrophilic group.

6. A device according to Claim 4 or 5, wherein the content of said hydrophilic group-containing repeating units (b) and/or (c) and/or (b′) and/or (c′) is 0.1 - 50 mole %, based on the total repeating units.

7. A device according to any one of Claims 4 - 6, wherein the mesogenic group M is selected from the group consisting of $-(Ph)_a-T$ and $-(Ph)_b-X-(Ph)_c-T$, wherein a is 2 or 3, b is 1 or 2, c is 1 or 2, ph is p-phenylene group, T is selected from the group consisting of phenyl group, $-NHCOCH_3$, -CN, $OCH_3$, $-NO_2$, a halogen atoms, alkyl groups containing 1 - 8 carbon atoms, $CF_3$ and $-N(CH_3)_2$, and X is selected from the group consisting of -CH = CH-, $-CH_2CH_2-$, CH = CH-COO-, -OCO-CH = CH-, -COO-, -OCO-, -CONH-, -NHCO-, -CH = N-, -N = CH-, -N = N-, $-N\underset{\uparrow \atop O}{=}N-$,

and trans-1,4-cyclohexylene group; and the spacer group A is selected from the group consisting of methylene chains containing 1 - 12 carbon atoms, oxyethylene chains and oxypropylene chains.

8. A device according to any one of Claims 4 - 7, wherein the divalent organic radical Q is selected from the group consisting of $-A^1-$, $-A^1-O-Ph-$ and $-A^1-O-Ph-COO-A^2-$, wherein $A^1$ is a polymethylene chain containing 2 - 14 carbon atoms, Ph is p-phenylene group, and $A^2$ is a polymethylene chain containing 2 - 14 carbon atoms

9. A device according to any one of Claims 1 - 8, wherein said high molecular weight liquid crystal has a molecular weight between about 2,000 and about 10,000,000.

10. A device according to any one of Claims 1 - 9, wherein said high molecular weight liquid crystal has been crosslinked.

11. A device according to any one of Claims 1 - 10, wherein the liquid surface-developed film is further aligned by drawing, by electric field alignment, by magnetic field alignment, or by retaining in a chemically or physically aligned substrate.

12. A device according to any one of Claims 1 - 11, wherein said liquid crystal material further contains at least one selected from the group consisting of dichroic dyes, dyes, low molecular weight liquid crystals, and non liquid crystaline pclymers.

13. A device according to any one of Claims 1 - 12, wherein the liquid surface-developed film is a non-LB film.

14. A device according to any one of Claims 1 - 13, which comprises said layer of a liquid crystal material in the smectic C phase, contacting an electrode.

15. A device according to any one of Claims 1 - 14, which comprises (1) said layer of a liquid crystal material, (2) a plurality of electrodes suitable for applying a voltage to said liquid crystal material, (3) electronic means for applying a voltage to a desired electrode, and (4) means for producing an observable optical change upon application of an appropriate voltage.

16. A method for producing a device according to any one of Claims 1 - 15, which comprises spreading a solution of said liquid crystal material on a liquid surface, and supporting the liquid surface-developed film on a substrate.

17. An element suitable for information storage, which comprises a liquid surface-developed film of a liquid crystal material comprising at least one pendant mesogenic group-containing high molecular weight liquid crystal, containing at least one hydrophilic group.

18. A method for producing the element of Claim 17, which comprises spreading a solution of said liquid crystal material on a liquid surface to form a liquid surface-developed film.